# EUROPEAN PATENT SPECIFICATION

(11) **EP 1 942 380 B1**
(45) Date of publication and mention of the grant of the patent: **07.08.2019**
(21) Application number: 08100098.6
(22) Date of filing: 04.01.2008
(51) Int. Cl.: G03G 15/08, G03G 21/18, G03G 15/00

(54) **Apparatus and method for storing information on toner usage**
Vorrichtung und Verfahren zur Speicherung von Informationen zur Verwendung eines Toners
Appareil et procédé de stockage d'informations sur un toner

(30) Priority: 05.01.2007 KR 20070001713
(43) Date of publication of application: 09.07.2008
(73) Proprietor: HP Printing Korea Co., Ltd., Gyeonggi-do 16677 (KR)
(72) Inventor: Lee, Il-su, Gyeonggi-do (KR); Kim, Yong-geun, Gyeonggi-do (KR); Jo, Hae-seog, Gyeonggi-do (KR); Lee, Chang-bok, Gyeonggi-do (KR); Lim, Young-kak, Gyeonggi-do (KR)
(74) Representative: Walaski, Jan Filip

(56) References cited:
- EP-A1- 0 587 172
- EP-A2- 1 826 620
- JP-A- H07 309 018
- JP-A- 2005 164 940
- KR-A- 20060 132 317
- US-A1- 2001 021 313
- US-A1- 2005 254 832

## Description

The present invention relates to storing information on toner usage, more particularly, to a method of checking a life span of initially provided toner when an image forming device uses a cartridge having a customer replaceable unit monitor (CRUM) memory and a cartridge having no CRUM memory.

Image forming devices, such as printers, are generally provided with consumables, such as toner cartridges, when manufactured, in order to enable the use of the image forming device at an initial stage, which are unlike retail consumables that are for sale. Toner cartridges generally do not have a customer replaceable unit monitor (CRUM) memory that stores the amount of toner used in cartridges, in order to reduce manufacturing costs. Cartridges having the CRUM memory make it possible to check consumables by storing information on an amount of used toner in the CRUM, whereas cartridges having no memory storing information on an amount of remaining toner make it impossible to check the life span of toner since there is no information on an amount of used toner. Therefore, it is impossible to determine how much toner remains, so that users cannot be informed of information on the amount of remaining toner. Moreover, since users cannot be informed of how much toner remains, it is impossible to determine when to purchase a new toner cartridge. If cartridges, which were installed when image forming devices were being manufactured, have no CRUM memory, and retail cartridges have the CRUM memory, it is impossible to initialize toner and properly indicate CRUM information. Furthermore, when cartridges that are not empty are reinstalled, it is difficult to determine whether to reuse them.

KR20060132317 relates to an image forming device and printing method. US2005/254832 relates to an image forming apparatus attached with replaceable unit.

According to an aspect of the present invention there is provided a method according to claim 1. According to another aspect of the present invention there is provided an image forming device according to claim 4. According to another aspect of the invention, there is provided a computer readable recording medium according to claim 8.

The present invention provides a method and apparatus to store information on an amount of toner used in a customer replaceable unit monitor (CRUM) memory or a non-volatile memory of an image forming device according to whether the image forming device includes the CRUM memory, thereby reducing costs to manufacture a cartridge and providing a user with the information on an amount of used toner.

Additional aspects and utilities of the present invention will be set forth in part in the description which follows and, in part, will be obvious from the description, or may be learned by practice of the invention.

The foregoing and/or other aspects and utilities of the present invention are achieved by providing a method of storing information on an amount of used toner, the method including determining whether a customer replaceable unit monitor (CRUM) memory to store information on an amount of used toner is included in a cartridge of an image forming device, storing the information on the amount of used toner in a non-volatile memory of the image forming device when the CRUM memory is not included in the cartridge of the image forming device, and storing the information on the amount of used toner in the CRUM memory when the CRUM memory is included in the cartridge.

The foregoing and/or other aspects and utilities of the present invention are also achieved by providing an apparatus to store information on an amount of used toner, the apparatus including a non-volatile memory to store the information on the amount of used toner, a CRUM memory determination unit to determine whether a CRUM memory is included in a cartridge included in an image forming device, and a memory controller to control the non-volatile memory to store the information on the amount of used toner when the CRUM memory determination unit determines that the CRUM memory is not included in the cartridge, and to control the CRUM memory to store the information on the amount of used toner when the CRUM memory determination unit determines that the CRUM memory is included in the cartridge.

The foregoing and/or other aspects and utilities of the present invention are also achieved by providing an image forming device including a non-volatile memory to store information on an amount of used toner, a CRUM memory determination unit to determine whether a CRUM memory is included in a cartridge included in the image forming device, and a memory controller to control the non-volatile memory or the CRUM memory to store the information on the amount of used toner according to a determination of whether the CRUM memory is included in a cartridge, wherein a cartridge having the CRUM memory and a cartridge having no CRUM memory are installed in the image forming device.

These and/or other aspects and utilities of the present invention will become apparent and more readily appreciated from the following description of the embodiments, taken in conjunction with the accompanying drawings, in which:
FIG. 1 is a flowchart illustrating a method of storing information on an amount of used toner according to an embodiment of the present invention; and
FIG. 2 is a block diagram of an apparatus to store information on an amount of used toner according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

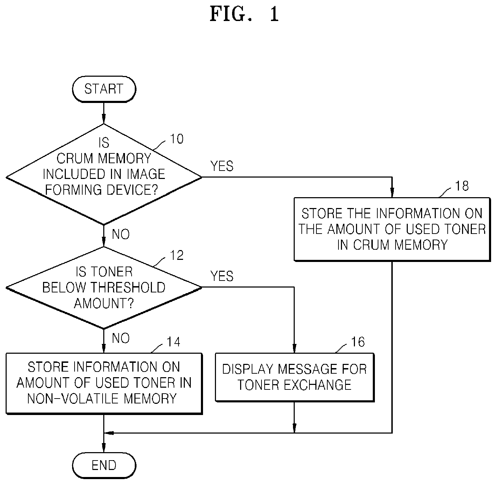

FIG. 1 is a flowchart illustrating a method of storing information on an amount of used toner according to an embodiment of the present invention. Referring to FIG. 1, it is determined whether a cartridge included in an image forming device includes a customer replaceable unit monitor (CRUM) memory to store information on an amount of used toner in operation 10.

If the CRUM memory is not included in the cartridge, it is determined whether the toner of the cartridge is below the threshold amount in operation 12. No inclusion of the CRUM memory in the cartridge can indicate that the cartridge was installed in the image forming device when the image forming device was manufactured and that the cartridge does not include the CRUM memory. The threshold amount is a reference amount indicating that toner remaining in the cartridge is low or that toner does not remain therein. It can be determined whether the toner of the cartridge is below the threshold amount by using information on a number of dots used to print or by detecting a signal to indicate that the initial toner cartridge is empty.

If the toner of the cartridge is not below the threshold amount, information on the amount of used toner is stored in a non-volatile memory of the image forming device in operation 14. It can be determined whether the toner of the cartridge is not below the threshold amount according to results showing that the number of dots used to print does not exceed a threshold value or that the signal to indicate that the initial toner cartridge is empty is not detected. As described above, the information on the amount of used toner can be information on the number of dots used to print. The non-volatile memory is a storage medium, such as a read only memory (ROM), a programmable read only memory (PROM), an erasable and programmable read only memory (EPROM), a one time programmable read only memory (OTP), an electrically erasable programmable read-only memory (EEPROM), a flash memory, and the like, included in the image forming device, unlike a CRUM memory included in a retail toner cartridge that is for sale. The non-volatile memory is used as a space to store the information on the amount of used toner according to the present invention while also storing several programs and data used to operate the image forming device. To this end, address information on the space to store the information on the amount of used toner is pre-allocated.

If it is determined that the toner of the cartridge is below the threshold amount in operation 12, a message is displayed for toner exchange in operation 16. The toner below the threshold amount indicates that little or no initial toner remains. Therefore, the message for toner exchange is displayed on a screen in order to exchange the initial toner cartridge with the retail toner cartridge. The user can determine that the life span of the initial toner cartridge is over by checking the message for the toner exchange and exchange the initial toner cartridge with the retail toner cartridge. The message is displayed on the image forming device or a host connected to the image forming device.

If it is determined that the CRUM memory is included in the cartridge in operation 10, the information on an amount of used toner is stored in the CRUM memory in operation 18. Inclusion of the CRUM memory in the cartridge indicates that the cartridge included in the image forming device is the retail cartridge including the CRUM memory. If the retail cartridge is determined to be included in the image forming device, the information on the amount of used toner is stored in the CRUM memory included in the retail cartridge. Information on the number of dots can be stored as the information on the amount of used toner.

The present method invention can also be embodied as computer readable code on a computer readable recording medium. In more detail, a computer readable recording medium storing a program to execute a method of determining if the CRUM memory storing the information on the amount of used toner is included in the cartridge included in image forming device; if the CRUM memory is not included in the cartridge, storing the information on the amount of used toner in a non-volatile memory of the image forming device; and if the CRUM memory is included in the cartridge, storing the information on the amount of used toner in the CRUM memory.

For example, the computer readable recording medium can be any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed network coupled computer systems so that the computer readable code is stored and executed in a distributed fashion. Also, functional programs, code and code segments to accomplish the present invention can be easily construed by programmer skilled in the art to which the present invention pertains.

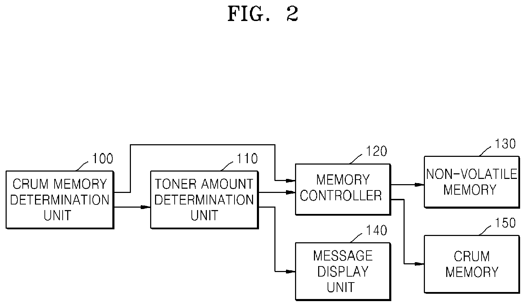

Hereinafter, an apparatus to store information on the amount of used toner according to the present invention will now be described with reference to FIG. 2.

FIG. 2 is a block diagram of the apparatus to store information on the amount of used toner according to an embodiment of the present invention. The apparatus to store information on the amount of used toner may include a CRUM memory determination unit 100, a toner amount determination unit 110, a memory controller 120, a non-volatile memory 130, a message display unit 140, and a CRUM memory 150.

The CRUM memory determination unit 100 determines if the CRUM memory 150 storing the information on the amount of used toner is included in a cartridge included in an image forming device, and outputs a determination result to the toner amount determination unit 110 or the memory controller 120.

No inclusion of the CRUM memory 150 in the cartridge of the image forming device can indicate that the cartridge was installed in the image forming device when the image forming device was manufactured and that the cartridge does not include the CRUM memory 150. The CRUM memory determination unit 100 outputs the determination result that the CRUM memory 150 is not included in the cartridge of the image forming device to the toner amount determination unit 110. The CRUM memory determination unit 100 outputs the determination result that the CRUM memory 150 is included in the cartridge of the image forming device to the memory controller 120.

If the toner amount determination unit 110 receives the determination result that the CRUM memory 150 is not included in the cartridge of the image forming device from the CRUM memory determination unit 100, the toner amount determination unit 110 determines whether the toner of the cartridge included in the image forming device is below the threshold amount, and outputs a determination result to the memory controller 120 or the message display unit 140. The toner amount determination unit 110 can determine whether the toner of the cartridge included in the image forming device is below the threshold amount by using information on the number of dots used to print or by detecting a signal to indicate that the initial toner cartridge is empty. The toner amount determination unit 110 outputs the determination result of that the toner of the cartridge included in the image forming device is not below the threshold amount to the memory controller 120. The toner amount determination unit 110 can determine whether the toner of the cartridge included in the image forming device is not below the threshold amount according to results showing that the number of dots used to print does not exceed a threshold value or that the signal to indicate that the initial toner cartridge is empty is not detected. The toner amount determination unit 110 outputs the determination result that the toner of the cartridge included in the image forming device is below the threshold amount to the message display unit 140.

If the memory controller 120 receives the determination results that the CRUM memory 150 is not included in the cartridge of the image forming device and the toner of the cartridge included in the image forming device is below the threshold amount from the toner amount determination unit 110, the memory controller 120 controls the non-volatile memory 130 to store the information on the amount of used toner. If the memory controller 120 receives the determination result that the CRUM memory 150 is included in the cartridge of the image forming device from the toner amount determination unit 110, the memory controller 120 controls the CRUM memory 150 to store the information on the amount of used toner.

Inclusion of the CRUM memory 150 in the cartridge of the image forming device indicates that the cartridge included in the image forming device is a retail cartridge that is for sale including the CRUM memory 150. If the retail cartridge is determined to be included in the cartridge of the image forming device, the memory controller 120 stores the information on the amount of used toner in the CRUM memory 150 included in the retail cartridge. The information on the amount of used toner can be determined according to information on a number of dots used to print or by detecting a signal to indicate that the retail cartridge is empty.

The non-volatile memory 130 is a storage medium, such as ROM, a PROM, an EPROM, an OTP, an EEPROM, a flash memory, and the like, included in the image forming device, unlike the CRUM memory 150 included in the retail cartridge. The non-volatile memory 130 is used as a space to store the information on the amount of used toner according to the present invention while also storing several programs and data used to operate the image forming device. To this end, address information on the space to store the information on the amount of used toner is pre-allocated. The non-volatile memory 130 may differentiate a storage space in order to divide and store the information on the amount of used toner according to the determination result of the CRUM memory determination unit 100. For example, the information on the amount of used toner is stored in a predetermined area of the non-volatile memory 130 in response to the determination result of the CRUM memory determination unit 100 that the CRUM memory 150 is not included in the cartridge, and the information on the amount of used toner is stored in another area of the non-volatile memory 130 in response to the determination result of the CRUM memory determination unit 100 that the CRUM memory 150 is included in the cartridge.

If the message display unit 140 receives the determination result that the toner of the cartridge is below the threshold amount from the toner amount determination unit 110, the message display unit 140 displays a message for toner exchange. Full consumption of the toner indicates that a life span of the cartridge is over. Therefore, the message display unit 140 displays the message for cartridge exchange on a screen in order to exchange cartridges.

The CRUM memory 150 is installed in the cartridge and can store the information on the amount of used toner of the retail cartridge according to the control of the memory controller 120. The CRUM memory 150 can store information on the number of dots as the information on the amount of used toner.

A device to store information on an amount of used toner may be included in an image forming device including a printer, a multifunctional, a copier, and the like. The CRUM memory determination unit 100, the toner amount determination unit 110, the memory controller 120, the non-volatile memory 130, the message display unit 140, and the CRUM memory 150 can be included in the image forming device. The description of each element is the same as stated above. However, the memory controller 120 may control the CRUM memory 150 and the non-volatile memory 130 to store the information on the amount of used toner in response to the determination result of the CRUM memory determination unit 100 that the CRUM memory 150 is included in the cartridge.

According to the present invention, the method and apparatus to store the information on an amount of used toner in a CRUM memory or a non-volatile memory of an image forming device according to whether the CRUM memory is included in a cartridge of the image forming device, providing a user with the information on the amount of used toner although a cartridge having no CRUM memory is installed in the image forming device, reducing costs to manufacture the initial toner cartridge, thereby increasing efficiency in checking consumables of the image forming device.

Although a few embodiments of the present invention have been shown and described, it will be appreciated by those skilled in the art that changes may be made in these embodiments without departing from the principles of the invention, the scope of which is defined in the appended claims.

## Claims

1. A method of storing information on an amount of used toner, the method comprising:
determining whether a customer replaceable unit monitor CRUM memory (150) for storing the information on the amount of used toner is included in a cartridge of an image forming device;
determining whether the toner remaining in the cartridge is below a threshold amount when the CRUM memory (150) is not included in the cartridge of the image forming device;
storing the information on the amount of used toner in a non-volatile memory (130) of the image forming device when it is determined that the toner remaining in the cartridge is not below the threshold amount; and
storing the information on the amount of used toner in the CRUM memory (150) when the CRUM memory (150) is included in the cartridge;
wherein when a cartridge not including CRUM memory (150) is removed from and subsequently reinstalled in the image forming apparatus, the non-volatile memory is arranged to provide information on the amount of used toner in the reinstalled cartridge, and
wherein whether the toner remaining in the cartridge is below a threshold amount is determined by using information on a number of dots used to print.

2. The method of claim 1, wherein the threshold amount is a reference amount indicating that toner remaining in the cartridge is low or that toner does not remain therein.

3. The method of claim 1 or 2, further comprising:
displaying a message for toner exchange when it is determined that the toner remaining in the cartridge is below the threshold amount.

4. An image forming device comprising:
a non-volatile memory (130) for storing information on an amount of used toner;
a memory determination unit (100) for determining whether a customer replaceable unit monitor CRUM memory (150) is included in a cartridge for the image forming device;
a toner amount determination unit (110) to determine whether the toner remaining in the cartridge is below a threshold amount when the memory determination unit (100) determines that the CRUM memory is not included in the cartridge;
a memory controller (120) configured to:
control the non-volatile memory (130) to store the information on the amount of used toner when the toner amount determination unit (110) determines that the toner remaining in the cartridge is not below the threshold amount;
control the CRUM memory (150) to store the information on the amount of used toner, when the memory determination unit (100) determines that the CRUM memory (150) is included in the cartridge,
wherein a cartridge including CRUM memory (150) and a cartridge not including CRUM memory (150) are installable in the image forming device,
wherein when the cartridge not including CRUM memory (150) is removed from and subsequently reinstalled in the image forming apparatus, the non-volatile memory is arranged to provide information on the amount of used toner in the reinstalled cartridge, and
wherein whether the toner remaining in the cartridge is below a threshold amount is determined by using information on a number of dots used to print.

5. The image forming device of claim 4, wherein the threshold amount is a reference amount indicating that toner remaining in the cartridge is low or that toner does not remain therein.

6. The image forming device of claim 4 or 5, further comprising:
a message display unit for displaying a message for toner exchange when the toner amount determination unit determines that the toner remaining in the cartridge is below the threshold amount.

7. The image forming device of claim 4, wherein a first memory area of the non-volatile memory (130) is used to store the information on the amount of used toner when the memory determination unit (100) determines that the CRUM memory (150) is not included in the cartridge and a second memory area of the non-volatile memory (130) is used to store the information on the amount of used toner when the memory determination unit (100) determines that the CRUM memory (150) is included in the cartridge.

8. A computer readable recording medium storing a program comprising a computer readable code to cause the image forming device of claim 4 to execute the method of claim 1.

## Patentansprüche

1. Verfahren zum Speichern von Informationen über eine Menge an verbrauchtem Toner, wobei das Verfahren Folgendes umfasst:
Bestimmen, ob ein von dem Benutzer austauschbarer Einheitenmonitorspeicher (*customer replaceable unit monitor memory, CRUM-Speicher*) (150) zum Speichern der Informationen über die Menge an verbrauchtem Toner in einer Kartusche einer Bilderzeugungsvorrichtung enthalten ist;
Bestimmen, ob der in der Kartusche verbleibende Toner unter einer Schwellenmenge liegt, wenn der CRUM-Speicher (150) nicht in der Kartusche der Bilderzeugungsvorrichtung enthalten ist;
Speichern der Informationen über die Menge an verbrauchtem Toner in einem nicht flüchtigen Speicher (130) der Bilderzeugungsvorrichtung, wenn bestimmt wird, dass der in der Kartusche verbleibende Toner nicht unter der Schwellenmenge liegt; und
Speichern der Informationen über die Menge an verbrauchtem Toner in dem CRUM-Speicher (150), wenn der CRUM-Speicher (150) in der Kartusche enthalten ist;
wobei, wenn eine Kartusche, die keinen CRUM-Speicher (150) enthält, aus der Bilderzeugungsvorrichtung entfernt und anschließend wieder in die Bilderzeugungsvorrichtung eingesetzt wird, der nicht flüchtige Speicher angeordnet ist, um Informationen über die Menge an verbrauchtem Toner in der wieder eingesetzten Kartusche bereitzustellen, und
wobei unter Verwendung von Informationen über eine Anzahl von Punkten, die zum Drucken verwendet werden, bestimmt wird, ob der in der Kartusche verbleibende Toner unter einer Schwellenmenge liegt.

2. Verfahren nach Anspruch 1, wobei die Schwellenmenge eine Referenzmenge ist, die angibt, dass der in der Kartusche verbleibende Toner niedrig ist oder dass kein Toner darin verbleibt.

3. Verfahren nach Anspruch 1 oder 2, ferner Folgendes umfassend:
Anzeigen einer Meldung zum Toneraustausch, wenn bestimmt wird, dass der in der Kartusche verbleibende Toner unter der Schwellenmenge liegt.

4. Bilderzeugungsvorrichtung, Folgendes umfassend:
einen nicht flüchtigen Speicher (130) zum Speichern von Informationen über eine Menge an verbrauchtem Toner;
eine Speicherbestimmungseinheit (100) zum Bestimmen, ob ein von dem Benutzer austauschbarer Einheitenmonitorspeicher (*customer replaceable unit monitor memory, CRUM-Speicher)* (150) in einer Kartusche für die Bilderzeugungsvorrichtung enthalten ist;
eine Tonermengenbestimmungseinheit (110) zum Bestimmen, ob der in der Kartusche verbleibende Toner unter einer Schwellenmenge liegt, wenn die Speicherbestimmungseinheit (100) bestimmt, dass der CRUM-Speicher nicht in der Kartusche enthalten ist;
einen Speicher-Controller (120), welcher zu Folgendem konfiguriert ist:
Steuern des nicht flüchtigen Speichers (130), um die Informationen über die Menge an verbrauchtem Toner zu speichern, wenn die Tonermengenbestimmungseinheit (110) bestimmt, dass der in der Kartusche verbleibende Toner nicht unter der Schwellenmenge liegt;
Steuern des CRUM-Speichers (150) zum Speichern der Informationen über die Menge an verbrauchtem Toner, wenn die Speicherbestimmungseinheit (100) bestimmt, dass der CRUM-Speicher (150) in der Kartusche enthalten ist,
wobei eine Kartusche, die einen CRUM-Speicher (150) enthält, und eine Kartusche, die keinen CRUM-Speicher (150) enthält, in die Bilderzeugungsvorrichtung eingebaut werden können,
wobei wenn die Kartusche, die keinen CRUM-Speicher (150) enthält, aus der Bilderzeugungsvorrichtung entfernt und anschließend wieder in diese eingebaut wird, der nicht flüchtige Speicher angeordnet ist, um Informationen über die Menge an verbrauchtem Toner in der wieder installierten Kartusche bereitzustellen, und
wobei unter Verwendung von Informationen über eine Anzahl von Punkten, die zum Drucken verwendet werden, bestimmt wird, ob der in der Kartusche verbleibende Toner unter einer Schwellenmenge liegt.

5. Bilderzeugungsvorrichtung nach Anspruch 4, wobei die Schwellenmenge eine Referenzmenge ist, die angibt, dass der in der Kartusche verbleibende Toner niedrig ist oder dass kein Toner darin verbleibt.

6. Bilderzeugungsvorrichtung nach Anspruch 4 oder 5, ferner umfassend:
eine Nachrichtenanzeigeeinheit zum Anzeigen einer Nachricht zum Toneraustausch, wenn die Tonermengenbestimmungseinheit bestimmt, dass der in der Kartusche verbleibende Toner unter der Schwellenmenge liegt.

7. Bilderzeugungsvorrichtung nach Anspruch 4, wobei ein erster Speicherbereich des nicht flüchtigen Speichers (130) verwendet wird, um die Informationen über die Menge an verbrauchtem Toner zu speichern, wenn die Speicherbestimmungseinheit (100) bestimmt, dass der CRUM-Speicher (150) nicht in der Kartusche enthalten ist, und ein zweiter Speicherbereich des nicht flüchtigen Speichers (130) verwendet wird, um die Informationen über die Menge an verbrauchtem Toner zu speichern, wenn die Speicherbestimmungseinheit (100) bestimmt, dass der CRUM-Speicher (150) in der Kartusche enthalten ist.

8. Computerlesbares Speichermedium, das ein Programm speichert, das einen computerlesbaren Code umfasst, um die Bilderzeugungsvorrichtung nach Anspruch 4 zu veranlassen, das Verfahren nach Anspruch 1 auszuführen.

## Revendications

1. Procédé de stockage d'informations sur une quantité de toner utilisé, le procédé comprenant :
le fait de déterminer si une mémoire de surveillance d'unité remplaçable par l'utilisateur CRUM (150) pour stocker les informations sur la quantité de toner utilisé est incluse dans une cartouche d'un dispositif de formation d'image ;
le fait de déterminer si le toner restant dans la cartouche est inférieur à une quantité seuil lorsque la mémoire CRUM (150) n'est pas incluse dans la cartouche du dispositif de formation d'image ;
le stockage des informations sur la quantité de toner utilisé dans une mémoire non volatile (130) du dispositif de formation d'image lorsqu'il est déterminé que le toner restant dans la cartouche n'est pas inférieur à la quantité seuil ; et
le stockage des informations sur la quantité de toner utilisé dans la mémoire CRUM (150) lorsque la mémoire CRUM (150) est incluse dans la cartouche ;
lorsqu'une cartouche n'incluant pas de mémoire CRUM (150) est retirée de l'appareil de formation d'image et réinstallée ultérieurement dans celui-ci, la mémoire non volatile étant agencée pour fournir des informations sur la quantité de toner utilisé dans la cartouche réinstallée, et
le fait que le toner restant dans la cartouche est inférieur à une quantité seuil étant déterminé en utilisant des informations sur un certain nombre de points utilisés à imprimer.

2. Procédé selon la revendication 1, dans lequel la quantité seuil est une quantité de référence indiquant que le toner restant dans la cartouche est faible ou qu'il ne reste plus de toner à l'intérieur.

3. Procédé selon la revendication 1 ou 2, comprenant en outre :
l'affichage d'un message d'échange de toner lorsqu'il est déterminé que le toner restant dans la cartouche est inférieur à la quantité seuil.

4. Dispositif de formation d'image comprenant :
une mémoire non volatile (130) pour stocker des informations sur une quantité de toner utilisé ;
une unité de détermination de mémoire (100) pour déterminer si une mémoire de surveillance d'unité remplaçable par l'utilisateur CRUM (150) est incluse dans une cartouche pour le dispositif de formation d'image ;
une unité de détermination de quantité de toner (110) pour déterminer si le toner restant dans la cartouche est inférieur à une quantité seuil lorsque l'unité de détermination de mémoire (100) détermine que la mémoire CRUM n'est pas incluse dans la cartouche ;
un dispositif de commande de mémoire (120) configuré pour :
commander la mémoire non volatile (130) pour stocker les informations sur la quantité de toner utilisé lorsque l'unité de détermination de quantité de toner (110) détermine que le toner restant dans la cartouche n'est pas inférieur à la quantité seuil ;
commander la mémoire CRUM (150) pour stocker les informations sur la quantité de toner utilisé, lorsque l'unité de détermination de mémoire (100) détermine que la mémoire CRUM (150) est incluse dans la cartouche, une cartouche incluant une mémoire CRUM (150) et une cartouche n'incluant pas de mémoire CRUM (150) pouvant être installées dans le dispositif de formation d'image, lorsque la cartouche n'incluant pas la mémoire CRUM (150) est retirée de l'appareil de formation d'image et réinstallée dans celui-ci, la mémoire non volatile étant disposée pour fournir des informations sur la quantité de toner utilisé dans la cartouche réinstallée, et le fait que le toner restant dans la cartouche est inférieur à une quantité seuil étant déterminé en utilisant des informations sur un certain nombre de points utilisés à imprimer.

5. Dispositif de formation d'image selon la revendication 4, dans lequel la quantité seuil est une quantité de référence indiquant que le toner restant dans la cartouche est faible ou qu'il ne reste plus de toner à l'intérieur.

6. Dispositif de formation d'image selon la revendication 4 ou 5, comprenant en outre :
une unité d'affichage de message pour afficher un message d'échange de toner lorsque l'unité de détermination de quantité de toner détermine que le toner restant dans la cartouche est inférieur à la quantité seuil.

7. Dispositif de formation d'image selon la revendication 4, dans lequel une première zone de mémoire de la mémoire non volatile (130) est utilisée pour stocker les informations sur la quantité de toner utilisé lorsque l'unité de détermination de mémoire (100) détermine que la mémoire CRUM (150) n'est pas incluse dans la cartouche et une seconde zone de mémoire de la mémoire non volatile (130) est utilisée pour stocker les informations sur la quantité de toner utilisé lorsque l'unité de détermination de mémoire (100) détermine que la mémoire CRUM (150) est incluse dans la cartouche.

8. Support d'enregistrement lisible par ordinateur stockant un programme comprenant un code lisible par ordinateur pour amener le dispositif de formation d'image selon la revendication 4 à exécuter le procédé selon la revendication 1.
